# EUROPEAN PATENT APPLICATION

(11) **EP 4 744 926 A1**
(43) Date of publication of application: **20.05.2026**
(21) Application number: 24839410.8
(22) Date of filing: 14.06.2024
(51) Int. Cl.: B60K 6/365, B60K 6/40, B60K 6/48, B60K 6/52, B60K 6/543, F16H 1/06, F16H 57/023

(54) **WORK VEHICLE**

(30) Priority: 13.07.2023 JP 2023115037
(71) Applicant: Kubota Corporation, Osaka 556-8601 (JP)
(72) Inventor: HIRASE Yuji, Sakai-shi, Osaka 590-0908 (JP); YAGYU Sumio, Sakai-shi, Osaka 590-0908 (JP); OKAZAKI Kazuto, Sakai-shi, Osaka 590-0908 (JP); II Tsunehiro, Sakai-shi, Osaka 590-0908 (JP)
(74) Representative: Müller-Boré & Partner Patentanwälte PartG mbB
(86) International application number: PCT/JP2024/021631
(87) International publication number: WO 2025/013514

(57) **Abstract**

A work vehicle includes: a generator gear mechanism (21b, 31) that adjusts power from an engine (5) to increase speed and transmits the adjusted power to a generator (21); a motor gear mechanism (22b, 32) that adjusts power from a motor (22) to reduce speed and transmits the adjusted power; and a transmission (23, 24) that combines the power from the engine (5) with the power from the motor (22) adjusted to reduce speed by the motor gear mechanism (22b, 32) and transmits the combined power to a travel device.

## Description

### Technical Field

The present invention relates to the configuration of a transmission system in a work vehicle.

### Background Art

Tractors, which are an example of a work vehicle, include hybrid tractors provided with an engine and a motor in which engine power and motor power are transmitted to a transmission, combined by the transmission, and transmitted from the transmission to a travel device, as disclosed in Patent Document 1.

In this case, a generator driven by engine power is conceivably provided separately, in addition to the motor.

### Prior Art Documents

### Patent Documents

Patent Document 1: JP 2014-65349A

### Disclosure of the Invention

### Problem to be Solved by the Invention

In contrast to general passenger cars, in work vehicles, low-speed, high-torque power is transmitted to the travel device. In a hybrid work vehicle provided with a generator and a motor, increasing the output of the generator and the motor thereby necessitates an increase in the size of cores of the generator and the motor.

However, increasing the size of the generator and motor cores will be accompanied by an increase in both the size of the case accommodating the generator and the motor and the cost of the generator and the motor, thus leaving room for improvement.

An object of the invention is to provide a hybrid work vehicle provided with a generator and a motor in which the output of the generator and the motor can be increased while suppressing an increase in the size of cores of the generator and the motor.

### Means for Solving Problem

A work vehicle according to an aspect of the invention includes: a travel device; an engine; a generator; a motor; a battery; a generator gear mechanism configured to adjust power from the engine to increase speed and transmit the adjusted power to the generator; a motor gear mechanism configured to adjust power from the motor to reduce speed and transmit the adjusted power; and a transmission configured to combine the power from the engine with the power from the motor adjusted to reduce speed by the motor gear mechanism and transmit the combined power to the travel device.

According to this aspect of the invention, engine power is adjusted to increase speed by the generator gear mechanism and transmitted to the generator, and the generator is rotationally driven at high speed. Increasing the output of the generator is thereby possible without increasing the size of the generator core.

According to this aspect of the invention, motor power is transmitted to the transmission after being adjusted to reduce speed by the motor gear mechanism. By rotationally driving the motor at high speed, high-speed, low-torque power from the motor is transmitted to the transmission after being converted into low-speed, high-torque power, making it possible to increase the output of the motor without increasing the size of the motor core.

Because it is thereby possible to increase the output of the generator and the motor while suppressing an increase in both the size of the case accommodating the generator and the motor and the cost of the generator and the motor, an improvement in the travel performance of the work vehicle can be achieved.

In another aspect of the invention, preferably the generator and the motor are each a motor generator.

According to this aspect of the invention, the generator and the motor are motor generators, thus enabling the generator to be operated as a motor and the motor to be operated as a generator.

Operating the generator as a motor thereby enables power from the engine and the generator (motor) and power from the motor to be transmitted to the travel device after being combined by the transmission.

Operating the generator as a motor enables power from the generator (motor) and power from the motor to be transmitted to the travel device after being combined by the transmission, without transmitting engine power to the transmission.

Operating the motor as a generator enables the battery to be charged with power generation by the generator and power generation by the motor (generator).

This is advantageous in terms of improving the travel performance of the work vehicle, because it is possible to respond to various travel states, by employing motor generators as the generator and the motor, as described above.

In another aspect of the invention, preferably the work vehicle further includes: an engine transmission shaft configured to transmit the power from the engine; and a cylindrical motor transmission shaft attached to an outer periphery of the engine transmission shaft in such a manner as to be rotatable relative to the engine transmission shaft, the motor gear mechanism is attached to an end portion of the motor transmission shaft, the generator gear mechanism is attached to the engine transmission shaft at a portion thereof adjacent to the end portion of the motor transmission shaft, the power from the engine is transmitted to the generator via the generator gear mechanism, and to the transmission via the engine transmission shaft, and the power from the motor is transmitted to the transmission via the motor gear mechanism and the motor transmission shaft.

According to this aspect of the invention, in the case where a double shaft structure constituted by an engine transmission shaft and a cylindrical motor transmission shaft is employed, the generator gear mechanism and the motor gear mechanism are respectively attached to the engine transmission shaft and the motor transmission shaft in such a manner as to be adjacent to each other.

This is advantageous in terms of suppressing an increase in the size of the case accommodating the generator and the motor, because the generator gear mechanism and the motor gear mechanism are disposed compactly.

In another aspect of the invention, preferably the generator gear mechanism includes: a first transmission gear provided coaxially with a shaft of the generator and configured to operate in tandem with the shaft of the generator; and a second transmission gear attached to the engine transmission shaft, engaging the first transmission gear, and having a larger diameter than the first transmission gear, the motor gear mechanism includes: a third transmission gear provided coaxially with a shaft of the motor and configured to operate in tandem with the shaft of the motor; and a fourth transmission gear attached to the motor transmission shaft, engaging the third transmission gear, and having a larger diameter than the third transmission gear.

According to this aspect of the invention, the generator gear mechanism is constituted compactly, by having a smaller diameter first transmission gear and a larger diameter second transmission gear. Also, the motor gear mechanism is constituted compactly by having a smaller diameter third transmission gear and a larger diameter fourth transmission gear.

This is advantageous in terms of suppressing an increase in the size of the case accommodating the generator and the motor, because the generator gear mechanism and the motor gear mechanism are constituted compactly.

In another aspect of the invention, preferably a gear ratio of the third transmission gear and the fourth transmission gear and a gear ratio of the first transmission gear and the second transmission gear are set in such a manner that reduction in speed from the third transmission gear to the fourth transmission gear is less than reduction in speed from the first transmission gear to the second transmission gear.

According to this aspect of the invention, in the case where motor power is transmitted to the transmission after being adjusted to reduce speed by the motor gear mechanism, adjusting the motor power to reduce speed more than necessary can be avoided.

This is advantageous in terms of improving the travel performance of the work vehicle, because motor power adjusted to reduce speed by the motor gear mechanism can be readily combined with engine power in the transmission.

In another aspect of the invention, preferably the engine and motor transmission shafts are disposed parallel to a front-rear direction, the generator is disposed on one of a left and right of the engine and motor transmission shafts, and the motor is disposed on the other of the left and right of the engine and motor transmission shafts.

According to this aspect of the invention, the engine and motor transmission shafts, the generator, and the motor are arranged in the left-right direction, because the generator and the motor are respectively disposed on one of the left and right and the other of the left and right of the engine and motor transmission shafts disposed parallel to the front-rear direction.

This is advantageous in terms of suppressing an increase in the size of the case accommodating the generator and the motor, because the engine and motor transmission shafts, the generator, and the motor are disposed compactly.

According to this aspect of the invention, the first transmission gear of the shaft of the generator and the third transmission gear of the shaft of the motor are disposed on opposite sides of the engine and motor transmission shafts to each other, because the generator and the motor are disposed on opposite sides of the engine and motor transmission shafts to each other.

This is advantageous in terms of compactly disposing the generator gear mechanism and the motor gear mechanism, and in terms of suppressing an increase in the size of the case accommodating the generator and the motor, because the adjacently disposed generator and motor gear mechanisms can be positioned closer together, while avoiding interference between the first transmission gear of the shaft of the generator and the third transmission gear of the shaft of the motor.

In another aspect of the invention, preferably the shaft of the generator and the shaft of the motor are disposed at a lower position than the engine and motor transmission shafts.

According to this aspect of the invention, the engaging portion of the first and second transmission gears in the generator gear mechanism can be positioned closer to the engine and motor transmission shafts in the left-right direction, with the generator and the motor disposed on opposite sides of the engine and motor transmission shafts to each other. Also, the engaging portion of the third and fourth transmission gears in the motor gear mechanism can be positioned closer to the engine and motor transmission shafts in the left-right direction.

This is advantageous in terms of compactly disposing the engine and motor transmission shafts, the generator, and the motor, and in terms of suppressing an increase in the size of the case accommodating the generator and the motor, because the overall width of the engine and motor transmission shafts, the generator, and the motor is suppressed, by being able to position the generator and the motor closer together in the left-right direction.

In another aspect of the invention, preferably the work vehicle further includes: a pump configured to supply coolant to a cooling target; and a pump gear mechanism configured to transmit power from the engine transmission shaft to the pump, and the pump gear mechanism is attached to the engine transmission shaft at a portion thereof adjacent to the generator gear mechanism on an opposite side to the motor gear mechanism.

According to this aspect of the invention, in the case where a pump that supplies coolant to a cooling target is provided, the pump is rotationally driven by power from the engine transmission shaft that is transmitted to the pump via a pump gear mechanism.

In this case, the pump gear mechanism is attached to the engine transmission shaft at a portion thereof adjacent to the generator gear mechanism on the opposite side to the motor gear mechanism, and thus the generator and motor gear mechanisms and the pump gear mechanism are attached to the engine and motor transmission shafts in such a manner as to be adjacent to each other.

This is advantageous in terms of suppressing an increase in the size of the case accommodating the generator and the motor, because the generator gear mechanism, the motor gear mechanism, and the pump gear mechanism are disposed compactly.

In another aspect of the invention, preferably the pump is disposed downward of the engine and motor transmission shafts.

In work vehicles, the coolant reservoir is often located low down.

According to this aspect of the invention, the pump is readily disposed at a position close to the coolant reservoir, because the pump is disposed downward of the engine and motor transmission shafts, and thus the flow path from the coolant reservoir to the pump is shortened, which is advantageous in terms of simplifying the structure.

In another aspect of the invention, preferably the engine and motor transmission shafts are disposed parallel to a front-rear direction, the generator is disposed on one of a left and right of the engine and motor transmission shafts, the motor is disposed on the other of the left and right of the engine and motor transmission shafts, the shaft of the generator and the shaft of the motor are disposed at a lower position than the engine and motor transmission shafts, and the pump is disposed at a lower position than the shaft of the generator and the shaft of the motor.

According to this aspect of the invention, the engine and motor transmission shafts, the generator, and the motor are arranged in the left-right direction, because the generator and the motor are respectively disposed on one of the left and right and the other of the left and right of the engine and motor transmission shafts disposed parallel to the front-rear direction.

This is advantageous in terms of suppressing an increase in the size of the case accommodating the generator and the motor, because the engine and motor transmission shafts, the generator, and the motor are disposed compactly.

According to this aspect of the invention, the first transmission gear of the shaft of the generator and the third transmission gear of the shaft of the motor are disposed on opposite sides of the engine and motor transmission shafts to each other, because the generator and the motor are disposed on opposite sides of the engine and motor transmission shafts to each other.

This is advantageous in terms of compactly disposing the generator gear mechanism and the motor gear mechanism, and in terms of suppressing an increase in the size of the case accommodating the generator and the motor, because the adjacently disposed generator and motor gear mechanisms can be positioned closer together, while avoiding interference between the first transmission gear of the shaft of the generator and the third transmission gear of the shaft of the motor.

According to this aspect of the invention, the engaging portion of the first and second transmission gears in the generator gear mechanism can be positioned closer to the engine and motor transmission shafts in the left-right direction, with the generator and the motor disposed on opposite sides of the engine and motor transmission shafts to each other. Also, the engaging portion of the third transmission gear and the fourth transmission gear in the motor gear mechanism can be positioned closer to the engine and motor transmission shafts in the left-right direction.

This is advantageous in terms of compactly disposing the engine and motor transmission shafts, the generator, and the motor, and in terms of suppressing an increase in the size of the case accommodating the generator and the motor, because the overall width of the engine and motor transmission shafts, the generator, and the motor is suppressed, by being able to position the generator and the motor closer together in the left-right direction.

According to this aspect of the invention, in the case where the pump is disposed downward of the engine and motor transmission shafts, the pump is disposed at a lower position than the shaft of the generator and the shaft of the motor, and thus the pump is readily disposed between the generator and the motor in plan view.

This is advantageous in terms of compactly disposing the engine and motor transmission shafts, the generator, the motor, and the pump, and in terms of suppressing an increase in the size of the case accommodating the generator and the motor.

In another aspect of the invention, preferably the generator gear mechanism, the motor gear mechanism, and the pump gear mechanism are disposed on a front side of the generator and the motor, and the transmission is disposed on a rear side of the generator and the motor.

According to this aspect of the invention, the generator, motor and pump gear mechanisms and the transmission are disposed on opposite sides to each other with the generator and the motor interposed therebetween and are spaced away from each other, and are thus readily disposed in such a manner as to little affect each other.

### Brief Description of the Drawings

FIG. 1 is a left sideview of a tractor.
FIG. 2 is a schematic view showing the inside of a clutch housing, a gear case, a motor case, and a transmission case.
FIG. 3 is a transverse plan view of the clutch housing, the gear case, and the motor case.
FIG. 4 is a longitudinal left sideview of the clutch housing, the gear case, and the motor case.
FIG. 5 is a left sideview of the clutch housing and the motor case.
FIG. 6 is a front view of the clutch housing and the gear case.
FIG. 7 is a rear view of the motor case.

### Best Mode for Carrying out the Invention

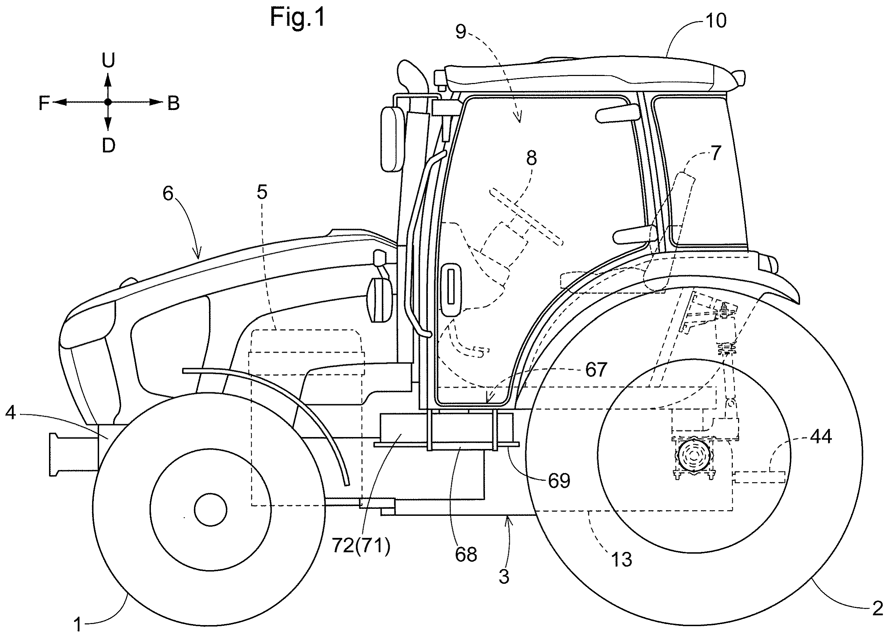

FIGS. 1 to 7 show a hybrid tractor, which is an example of a work vehicle. In FIGS. 1 to 7, F indicates forward, B indicates rearward, U indicates upward, D indicates downward, R indicates rightward, and L indicates leftward.

### Overall Configuration of Tractor

As shown in FIG. 1, a body 3 is supported by right and left front wheels 1 (correspond to travel device) and right and left rear wheels 2 (correspond to travel device), and a bonnet 6 is provided in a front portion of the body 3, and a driving section 9 is provided in a rear portion of the body 3.

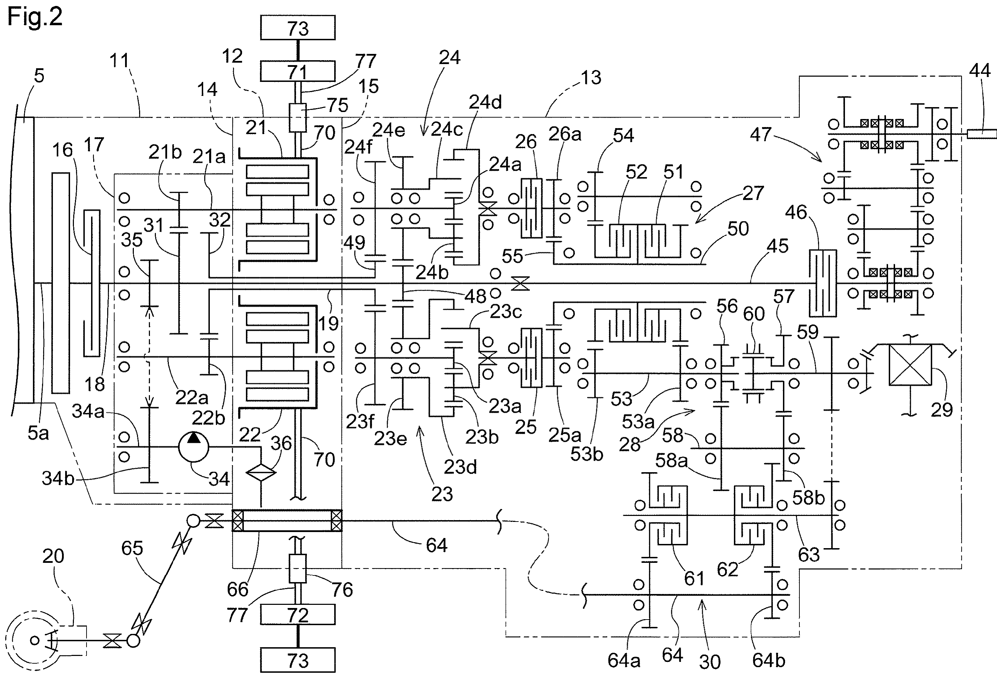

As shown in FIGS. 1 and 2, the body 3 includes an engine 5, a clutch housing 11 coupled to a rear portion of the engine 5, a motor case 12 coupled to a rear portion of the clutch housing 11, a transmission case 13 coupled to a rear portion of the motor case 12, and a front frame 4 coupled to a front portion of the engine 5.

The front wheels 1 are supported by the front frame 4, and the rear wheels 2 are supported by a rear portion of the transmission case 13. The engine 5 is covered by the bonnet 6. The driving section 9 is covered by a cabin 10, and a driver's seat 7 and a steering wheel 8 for steering the front wheels 1 are provided in the driving section 9.

### Configuration of Transmission System to Front and Rear Wheels

As shown in FIG. 2, the motor case 12 accommodates a first motor generator 21 (corresponds to generator) and a second motor generator 22 (corresponds to motor).

The transmission case 13 accommodates a first planetary device 23 (corresponds to transmission), a second planetary device 24 (corresponds to transmission), a first clutch 25, a second clutch 26, a forward/reverse switching device 27, an auxiliary gearbox 28, a rear wheel differential 29, a front wheel gearbox 30, and the like.

Power generation is mainly performed by the first motor generator 21 using power from the engine 5, and power is mainly output by the second motor generator 22.

Power from the engine 5 and power from the second motor generator 22 are transmitted to the first planetary device 23 and the second planetary device 24, and are combined in each of the first planetary device 23 and the second planetary device 24. The first planetary device 23 outputs low-speed combined power, and the second planetary device 24 outputs high-speed combined power.

In response to the first clutch 25 being operated to a transmission state, the low-speed combined power from the first planetary device 23 is transmitted to the forward/reverse switching device 27 via the first clutch 25. In response to the second clutch 26 being operated to a transmission state, the high-speed combined power from the second planetary device 24 is transmitted to the forward/reverse switching device 27 via the second clutch 26.

The low-speed and high-speed combined power is operated to a forward travel state and a reverse travel state by the forward/reverse switching device 27. Power from the forward/reverse switching device 27 is transmitted to the auxiliary gearbox 28, and from the auxiliary gearbox 28 to the rear wheels 2 via the rear wheel differential 29. Power branched from between the auxiliary gearbox 28 and the rear wheel differential 29 is transmitted to the front wheel gearbox 30, and from the front wheel gearbox 30 to the front wheels 1 via the front wheel differential 20.

### Configuration of Clutch Housing and Motor Case

As shown in FIGS. 2, 3, and 4, the clutch housing 11 and the motor case 12 are integrally formed, and a rear portion of the clutch housing 11 is coupled to a front portion of the motor case 12.

The inside of the clutch housing 11 is partitioned from the inside of the motor case 12 by a wall 14 of the motor case 12. A portion with an opening in the front portion of the clutch housing 11 is closed by being coupled to the engine 5. The rear portion of the motor case 12 is coupled to a wall 15, and the inside of the motor case 12 is partitioned from the inside of the transmission case 13 by the wall 15.

The clutch housing 11 accommodates a dry clutch 16 and a gear case 17, and the clutch 16 is connected to an output shaft 5a of the engine 5. The clutch 16 is connected to a transmission shaft 18 (corresponds to engine transmission shaft) that extends in the front-rear direction into the transmission case 13 from within the clutch housing 11, through the gear case 17 and the motor case 12.

Power from the engine 5 is transmitted to the first planetary device 23 and the second planetary device 24 as described below, via the clutch 16 and the transmission shaft 18.

The gear case 17 is attached to the wall 14 of the motor case 12 at a portion thereof on the opposite side to the inside of the motor case 12. The inside of the gear case 17 is partitioned from the area where the clutch 16 is located inside the clutch housing 11 and is partitioned from the inside of the motor case 12 by the wall 14 of the motor case 12.

### Configuration inside of Gear Case and Motor Case

As shown in FIGS. 2, 3, and 4, the body 3 includes a cylindrical transmission shaft 19 (corresponds to motor transmission shaft) that is supported in such a manner as to be rotatable relative to the transmission shaft 18, and extends in the front-rear direction into the transmission case 13, through the gear case 17 and the motor case 12.

Inside the motor case 12, the first motor generator 21 and the second motor generator 22 are arranged in the left-right direction and are supported by the wall 14 of the motor case 12. The transmission shafts 18 and 19 are provided between the first motor generator 21 and the second motor generator 22, with the first motor generator 21 being provided on the right side of the transmission shafts 18 and 19, and the second motor generator 22 being provided on the left side of the transmission shafts 18 and 19.

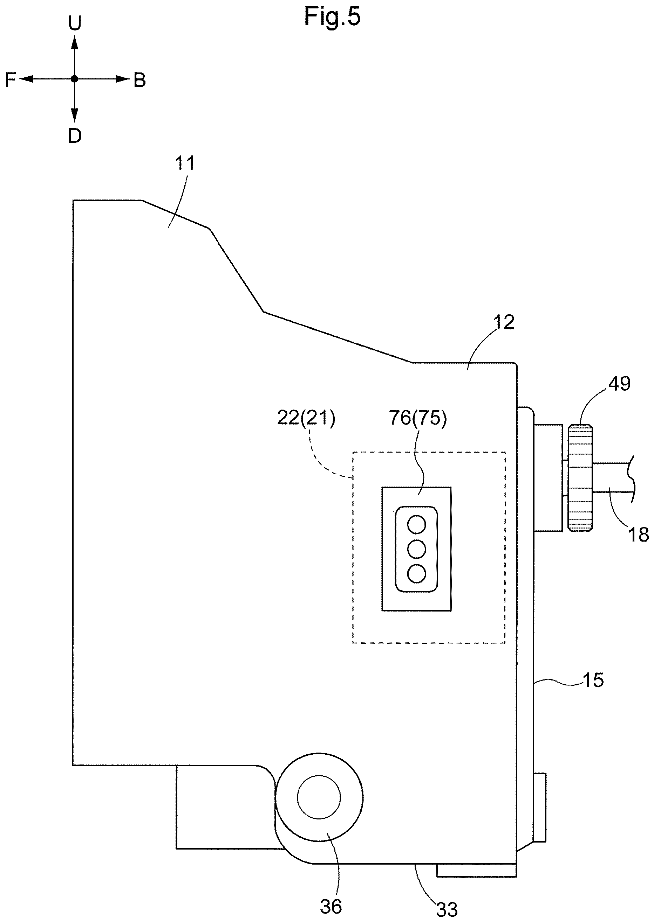

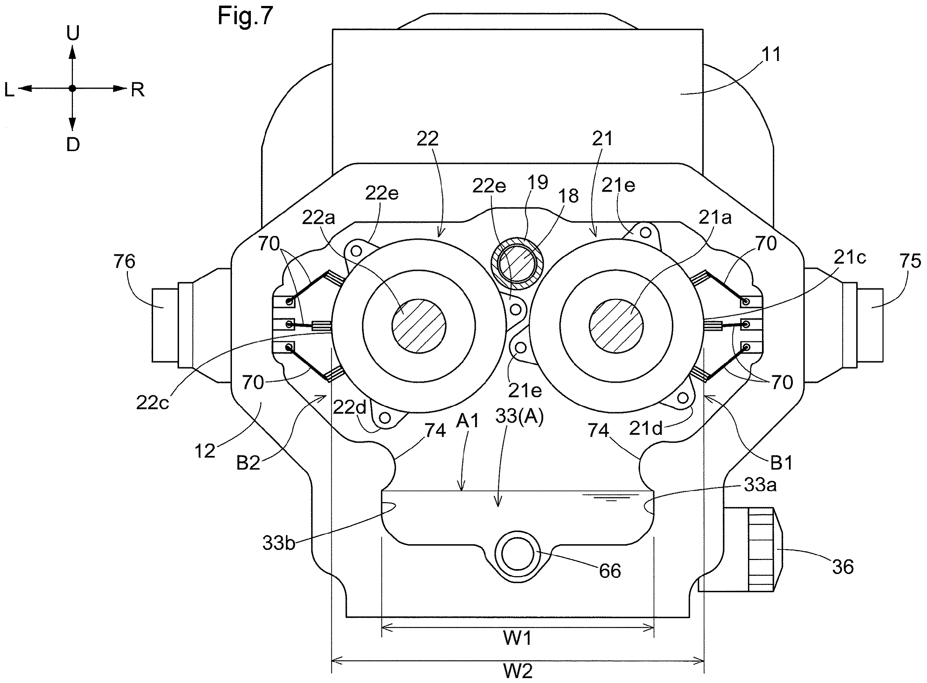

The first motor generator 21 and the second motor generator 22 are provided such that a shaft 21a of the first motor generator 21 and a shaft 22a of the second motor generator 22 lie parallel to the front-rear direction at a lower position than the transmission shafts 18 and 19 (see FIGS. 5 and 7). The shaft 21a of the first motor generator 21 and the shaft 22a of the second motor generator 22 extend forward into the gear case 17.

### Configuration of Generator Gear Mechanism

As shown in FIGS. 2, 3, and 4, inside the gear case 17, the transmission shaft 18 has coupled thereto a transmission gear 31 (corresponds to generator gear mechanism) (corresponds to second transmission gear) at a portion thereof adjacent on the front side to the front end portion of the transmission shaft 19. The shaft 21a of the first motor generator 21 has coupled thereto a transmission gear 21b (corresponds to generator gear mechanism) (corresponds to first transmission gear).

The transmission gear 31 engages the transmission gear 21b of the first motor generator 21, and the transmission gear 31 has a larger diameter than the transmission gear 21b of the first motor generator 21. Power from the engine 5 is adjusted to increase speed from the transmission shaft 18 via the transmission gear 31 and the transmission gear 21b of the first motor generator 21, and is transmitted to the first motor generator 21, and the first motor generator 21 performs power generation.

### Configuration of Motor Gear Mechanism

As shown in FIGS. 2, 3, and 4, inside the gear case 17, the transmission shaft 19 has coupled thereto a transmission gear 32 (corresponds to motor gear mechanism) (corresponds to fourth transmission gear) at a front end portion thereof. The shaft 22a of the second motor generator 22 has coupled thereto a transmission gear 22b (corresponds to motor gear mechanism) (corresponds to third transmission gear).

The transmission gear 32 engages the transmission gear 22b of the second motor generator 22, and the transmission gear 32 has a larger diameter than the transmission gear 22b of the second motor generator 22. Power from the second motor generator 22 is adjusted to reduce speed via the transmission gear 22b of the second motor generator 22 and the transmission gear 32, and is transmitted to the transmission shaft 19 and to the first planetary device 23 and the second planetary device 24 as described below.

### Correspondence with Claims relating to Generator and Motor Gear Mechanisms

According to the above configuration, a work vehicle includes a travel device (front wheels 1 and rear wheels 2), an engine 5, a generator (first motor generator 21), a motor (second motor generator 22), and batteries 73 (see FIG. 2).

Further included is a generator gear mechanism (transmission gears 21b, 31) that adjusts power from the engine 5 to increase speed and transmits the adjusted power to the generator (first motor generator 21).

Further included is a motor gear mechanism (transmission gears 22b, 32) that adjusts power from the motor (second motor generator 22) to reduce speed and transmits the adjusted power.

Further included is a transmission (first planetary device 23 and second planetary device 24) that combines the power from the engine 5 and the power from the motor (second motor generator 22) adjusted to reduce speed by the motor gear mechanism (transmission gears 22b, 32) and transmits the combined power to the travel device (front wheels 1 and rear wheels 2).

The generator (first motor generator 21) and the motor (second motor generator 22) are motor generators (first motor generator 21 and second motor generator 22).

Further included are an engine transmission shaft (transmission shaft 18) that transmits the power from the engine 5 and a cylindrical motor transmission shaft (transmission shaft 19) attached to the outer periphery of the engine transmission shaft (transmission shaft 18) in such a manner as to be rotatable relative to the engine transmission shaft (transmission shaft 18).

The motor gear mechanism (transmission gears 22b, 32) is attached to an end portion of the motor transmission shaft (transmission shaft 19). The generator gear mechanism (transmission gears 21b, 31) is attached to the engine transmission shaft (transmission shaft 18) at a portion thereof adjacent to an end portion of the motor transmission shaft (transmission shaft 19).

Power from the engine 5 is transmitted to the generator (first motor generator 21) via the generator gear mechanism (transmission gears 21b, 31), and to the transmission (first planetary device 23 and second planetary device 24) via the engine transmission shaft (transmission shaft 18).

Power from the motor (second motor generator 22) is transmitted to the transmission (first planetary device 23 and second planetary device 24) via the motor gear mechanism (transmission gears 22b, 32) and the motor transmission shaft (transmission shaft 19).

The generator gear mechanism (transmission gears 21b, 31) has a first transmission gear (transmission gear 21b) provided coaxially with the shaft 21a of the generator (first motor generator 21) and configured to operate in tandem with the shaft 21a of the generator (first motor generator 21), and a second transmission gear (transmission gear 31) attached to the engine transmission shaft (transmission shaft 18), engaging the first transmission gear (transmission gear 21b), and having a larger diameter than the first transmission gear (transmission gear 21b).

The motor gear mechanism (transmission gears 22b, 32) has a third transmission gear (transmission gear 22b) provided coaxially with the shaft 22a of the motor (second motor generator 22) and configured to operate in tandem with the shaft 22a of the motor (second motor generator 22), and a fourth transmission gear (transmission gear 32) attached to the motor transmission shaft (transmission shaft 19), engaging the third transmission gear (transmission gear 22b), and having a larger diameter than the third transmission gear (transmission gear 22b).

### Correspondence with Claims relating to First and Second Motor Generators

According to the above configuration, the engine transmission shaft (transmission shaft 18) and the motor transmission shaft (transmission shaft 19) are disposed parallel to the front-rear direction.

The generator (first motor generator 21) is disposed on one of the left and right of the engine transmission shaft (transmission shaft 18) and the motor transmission shaft (transmission shaft 19), and the motor (second motor generator 22) is disposed on the other of the left and right of the engine transmission shaft (transmission shaft 18) and the motor transmission shaft (transmission shaft 19).

The shaft 21a of the generator (first motor generator 21) and the shaft 22a of the motor (second motor generator 22) are disposed at a lower position than the engine transmission shaft (transmission shaft 18) and the motor transmission shaft (transmission shaft 19).

### Configuration relating to First and Second Motor Generators

As shown in FIG. 2, the body 3 includes a first inverter 71 provided for the first motor generator 21, a second inverter 72 provided for the second motor generator 22, and the batteries 73.

In the case where the first motor generator 21 (second motor generator 22) operates as a motor and provides power to the transmission shaft 18 (transmission shaft 19), the first motor generator 21 (second motor generator 22) operates as a motor (drive mode) as a result of DC power from the battery 73 being converted into AC power by the first inverter 71 (second inverter 72) and supplied to the first motor generator 21 (second motor generator 22).

In the case where the first motor generator 21 (second motor generator 22) is driven and operates as a generator, AC power generated by the first motor generator 21 (second motor generator 22) is converted into DC power by the first inverter 71 (second inverter 72) and the battery 73 is charged (regeneration mode). Note that capacitors (not shown) can be used as the batteries 73.

The regeneration mode and the drive mode of the first motor generator 21, and the regeneration mode and the drive mode of the second motor generator 22 are set by a control device (not shown), based on the state of work machinery (not shown) attached to the body 3, the travel state of the body 3, and the like.

The state in which the first motor generator 21 is set to the regeneration mode and the second motor generator 22 is set to the drive mode is a basic travel state.

In the basic travel state, power from the engine 5 is transmitted to the first planetary device 23 and the second planetary device 24, and power from the second motor generator 22 is transmitted to the first planetary device 23 and the second planetary device 24, as described below.

By operating the clutch 16 in a shutoff state, it is also possible to stop the engine 5 and travel with the first motor generator 21 in the drive mode and the second motor generator 22 in the drive mode.

### Configuration relating to Gear Ratios of Generator and Motor Gear Mechanisms

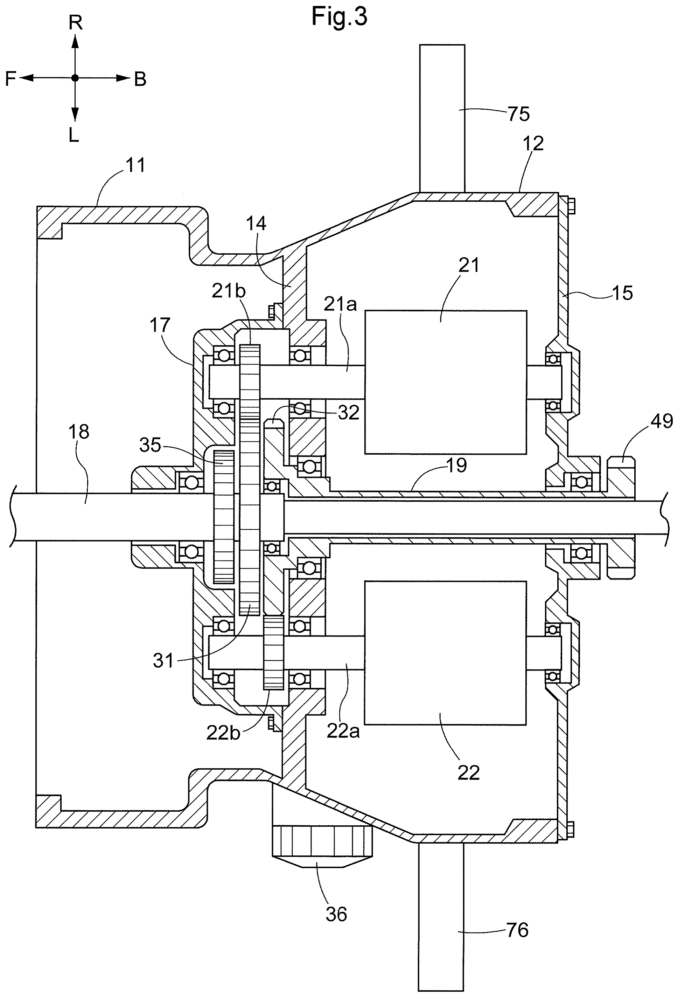

As shown in FIGS. 2 and 3, the gear ratio of the transmission gear 21b of the first motor generator 21 and the transmission gear 31 and the gear ratio of the transmission gear 22b of the second motor generator 22 and the transmission gear 32 are set such that the reduction in speed from the transmission gear 22b of the second motor generator 22 to the transmission gear 32 is less than the reduction in speed from the transmission gear 21b of the first motor generator 21 to the transmission gear 31.

In the drive mode of the first motor generator 21 and the drive mode of the second motor generator 22, the transmission shaft 19 is thereby rotationally driven at a slightly higher speed than the transmission shaft 18.

In both the regeneration mode of the first motor generator 21 (state in which power from engine 5 is transmitted to transmission shaft 18) and the drive mode of the second motor generator 22, the transmission shaft 19 can similarly be rotationally driven at a slightly higher speed than the transmission shaft 18.

### Correspondence with Claims relating to Gear Ratios of Generator and Motor Gear Mechanisms

According to the above configuration, the gear ratio of the third transmission gear (transmission gear 22b) and the fourth transmission gear (transmission gear 32) and the gear ratio of the first transmission gear (transmission gear 21b) and the second transmission gear (transmission gear 31) are set in such a manner that reduction in speed from the third transmission gear (transmission gear 22b) to the fourth transmission gear (transmission gear 32) is less than reduction in speed from the first transmission gear (transmission gear 21b) to the second transmission gear (transmission gear 31).

### Configuration of First Planetary Device

As shown in FIG. 2, the first planetary device 23 includes a solar gear 23a, a plurality of planetary gears 23b and a carrier 23c, a ring gear 23d, and transmission gears 23e and 23f.

In the first planetary device 23, the transmission gear 23e is coupled to the ring gear 23d, and the transmission gear 23f is coupled to the solar gear 23a. The planetary gears 23b are rotatably supported by the carrier 23c, and engage the solar gear 23a and the ring gear 23d.

Inside the transmission case 13, the transmission shaft 18 has coupled thereto a transmission gear 48, and the transmission gear 23e of the first planetary device 23 engages the transmission gear 48. Inside the transmission case 13, the transmission shaft 19 has coupled thereto a transmission gear 49, and the transmission gear 23f of the first planetary device 23 engages the transmission gear 49.

Power from the engine 5 (or first motor generator 21) is transmitted to the ring gear 23d of the first planetary device 23, via the transmission shaft 18 and the transmission gear 48. Power from the second motor generator 22 is transmitted to the solar gear 23a of the first planetary device 23, via the transmission gear 32, the transmission shaft 19, and the transmission gear 49.

In the first planetary device 23, power from the engine 5 (or first motor generator 21) and power from the second motor generator 22 are combined and adjusted for speed, and the resultant power is output from the carrier 23c of the first planetary device 23 to the first clutch 25 as low-speed combined power.

### Configuration of Second Planetary Device

As shown in FIG. 2, the second planetary device 24 includes a solar gear 24a, a plurality of planetary gears 24b and a carrier 24c, a ring gear 24d, and transmission gears 24e and 24f.

In the second planetary device 24, the transmission gear 24e is coupled to the carrier 24c, and the transmission gear 24f is coupled to the solar gear 24a. The planetary gears 24b are rotatably supported by the carrier 24c, and engage the solar gear 24a and the ring gear 24d. Inside the transmission case 13, the transmission gear 24e of the second planetary device 24 engages the transmission gear 48, and the transmission gear 24f of the second planetary device 24 engages the transmission gear 49.

Power from the engine 5 (or first motor generator 21) is transmitted to the carrier 24c of the second planetary device 24, via the transmission shaft 18 and the transmission gear 48. Power from the second motor generator 22 is transmitted to the solar gear 24a of the second planetary device 24, via the transmission gear 32, the transmission shaft 19, and the transmission gear 49.

In the second planetary device 24, power from the engine 5 (or first motor generator 21) and power from the second motor generator 22 are combined and adjusted for speed, and the resultant power is output from the ring gear 24d of the second planetary device 24 to the second clutch 26 as high-speed combined power.

### Configuration of Transmission System to PTO Shaft

As shown in FIG. 2, inside the transmission case 13, the transmission shaft 18 has coupled thereto a transmission shaft 45, and the transmission shaft 45 has connected thereto a PTO clutch 46. Further included are a PTO gearbox 47 and a PTO shaft 44 located in a rear portion of the transmission case 13 (see FIG. 1).

Power from the engine 5 is transmitted to the PTO gearbox 47 via the clutch 16, the transmission shafts 18 and 45, and the PTO clutch 46, and is transmitted from the PTO gearbox 47 to the PTO shaft 44. In the case where work machinery (not shown) is coupled to the rear portion of the body 3, a transmission shaft (not shown) is connected to span from the PTO shaft 44 to the work machinery, and power from the PTO shaft 44 is transmitted to the work machinery.

### Configuration of Forward/Reverse Switching Device

As shown in FIG. 2, the forward/reverse switching device 27 includes a cylindrical shaft 50, a forward clutch 51, a reverse clutch 52, a transmission shaft 53, and a relay gear 54.

The cylindrical shaft 50 is supported in such a manner as to be rotatable relative to the transmission shaft 45, and coupled to the cylindrical shaft 50 is a transmission gear 55. The transmission gear 55 engages a transmission gear 25a of the first clutch 25 and engages a transmission gear 26a of the second clutch 26.

The forward clutch 51 and the reverse clutch 52 are attached to the cylindrical shaft 50. Coupled to the transmission shaft 53 are transmission gears 53a and 53b, and the transmission gear 53a of the transmission shaft 53 engages an output gear of the forward clutch 51. The relay gear 54 engages an output gear of the reverse clutch 52 and engages the transmission gear 53b of the transmission shaft 53.

In response to the first clutch 25 being operated to the transmission state, the low-speed combined power from the first planetary device 23 is transmitted to the cylindrical shaft 50 via the first clutch 25. In response to the second clutch 26 being operated to the transmission state, the high-speed combined power from the second planetary device 24 is transmitted to the cylindrical shaft 50 via the second clutch 26.

In the forward/reverse switching device 27, in response to the forward clutch 51 being operated to a transmission state, power from the cylindrical shaft 50 is transmitted to the transmission shaft 53 via the forward clutch 51 in the forward travel state. In response to the reverse clutch 52 being operated to a transmission state, power from the cylindrical shaft 50 is transmitted to the transmission shaft 53 via the reverse clutch 52 and the relay gear 54 in the reverse travel state.

### Configuration of Auxiliary Gearbox

As shown in FIG. 2, the auxiliary gearbox 28 includes a high-speed gear 56, a low-speed gear 57, a transmission shaft 58, a rear wheel output shaft 59, and a shift member 60.

The high-speed gear 56 is coupled to the transmission shaft 53 and engages a transmission gear 58a of the transmission shaft 58. The rear wheel output shaft 59 is supported coaxially with the transmission shaft 53, and the shift member 60 is provided in a slidable manner on the rear wheel output shaft 59. The low-speed gear 57 is rotatably supported by the rear wheel output shaft 59 and engages a transmission gear 58b of the transmission shaft 58.

In response to the shift member 60 being operated to engage the high-speed gear 56, the transmission shaft 53 is coupled to the rear wheel output shaft 59, and power from the transmission shaft 53 is transmitted to the rear wheel output shaft 59 in a high-speed state, and is transmitted from the rear wheel output shaft 59 to the rear wheels 2 via the rear wheel differential 29.

In response to the shift member 60 being operated to engage the low-speed gear 57, power from the transmission shaft 53 is transmitted to the rear wheel output shaft 59 in a low-speed state, via the high-speed gear 56, the transmission shaft 58, and the low-speed gear 57, and is transmitted from the rear wheel output shaft 59 to the rear wheels 2 via the rear wheel differential 29.

### Configuration of Front Wheel Gearbox

As shown in FIG. 2, the front wheel gearbox 30 includes a standard clutch 61, a speed-increasing clutch 62, a transmission shaft 63, and a front wheel output shaft 64.

The standard clutch 61 and the speed-increasing clutch 62 are attached to the transmission shaft 63, and power from the rear wheel output shaft 59 is transmitted to the transmission shaft 63. The standard clutch 61 has an output gear that engages a transmission gear 64a of the front wheel output shaft 64, and the speed-increasing clutch 62 has an output gear that engages a transmission gear 64b of the front wheel output shaft 64.

When the front wheels 1 are being operated within the range of right and left setting angles from a straight travel position, the standard clutch 61 in the front wheel gearbox 30 is operated to a transmission state.

Power from the rear wheel output shaft 59 is transmitted to the front wheel output shaft 64 via the transmission shaft 63 and the standard clutch 61 and to the front wheels 1 via a transmission shaft 65 and the front wheel differential 20, and the front wheels 1 and the rear wheels 2 are driven at the same speed.

In response to the front wheels 1 being steered to the right or left beyond the right and left setting angles, the speed-increasing clutch 62 in the front wheel gearbox 30 is operated to a transmission state.

Power from the rear wheel output shaft 59 is transmitted to the front wheel output shaft 64 via the transmission shaft 63 and the speed-increasing clutch 62 and to the front wheels 1 via the transmission shaft 65 and the front wheel differential 20, and the front wheels 1 are driven at a higher speed than the rear wheels 2.

### Configuration relating to First and Second Inverters

As shown in FIG. 1, in right and left portions of a floor 67 of the driving section 9 are provided right and left steps 68 for boarding and disembarking. The transmission case 13 has right and left support members 69 coupled to right and left front portions thereof, and the first and second inverters 71 and 72 are respectively attached to the right and left support members 69.

The first inverter 71 is provided between the transmission case 13 and the right step 68 in plan view and downward of the right portion of the floor 67. The second inverter 72 is provided between the transmission case 13 and the left step 68 in plan view and downward of the left portion of the floor 67.

As shown in FIGS. 3 and 5, the first motor generator 21 includes a first relay terminal 75 on a right lateral outer portion thereof on the outer periphery of the motor case 12.

The second motor generator 22 includes a second relay terminal 76 on a left lateral outer portion thereof on the outer periphery of the motor case 12.

As shown in FIGS. 2 and 7, connected on the outside of the motor case 12 to span from the first inverter 71 to the first relay terminal 75 is a harness 77. Inside the motor case 12, there are flat power wires 70 connected to span from the first relay terminal 75 to terminals provided at a right end 21c of the first motor generator 21. The first motor generator 21 and the first inverter 71 are thereby connected via the harness 77, the first relay terminal 75, and the power wires 70.

Connected on the outside of the motor case 12 to span from the second inverter 72 to the second relay terminal 76 is a harness 77. Inside the motor case 12, there are flat power wires 70 connected to span from the second relay terminal 76 to terminals provided at a left end 22c of the second motor generator 22. The second motor generator 22 and the second inverter 72 are thereby connected via the harness 77, the second relay terminal 76, and the power wires 70.

As shown in FIGS. 3 and 7, the shaft 21a of the first motor generator 21 lies parallel to the front-rear direction, and the shaft 22a of the second motor generator 22 lies parallel to the front-rear direction, and thus the radial direction of the shaft 21a of the first motor generator 21 is the left-right and up-down directions, and the radial direction of the shaft 22a of the second motor generator 22 is the left-right and up-down directions.

Viewed from the left-right direction, the first motor generator 21, the first relay terminal 75, the first inverter 71, and the right power wires 70 overlap each other. Viewed from the left-right direction, the second motor generator 22, the second relay terminal 76, the second inverter 72, and the left power wires 70 overlap each other.

### Configuration of Oil Pump for Cooling First and Second Motor Generators

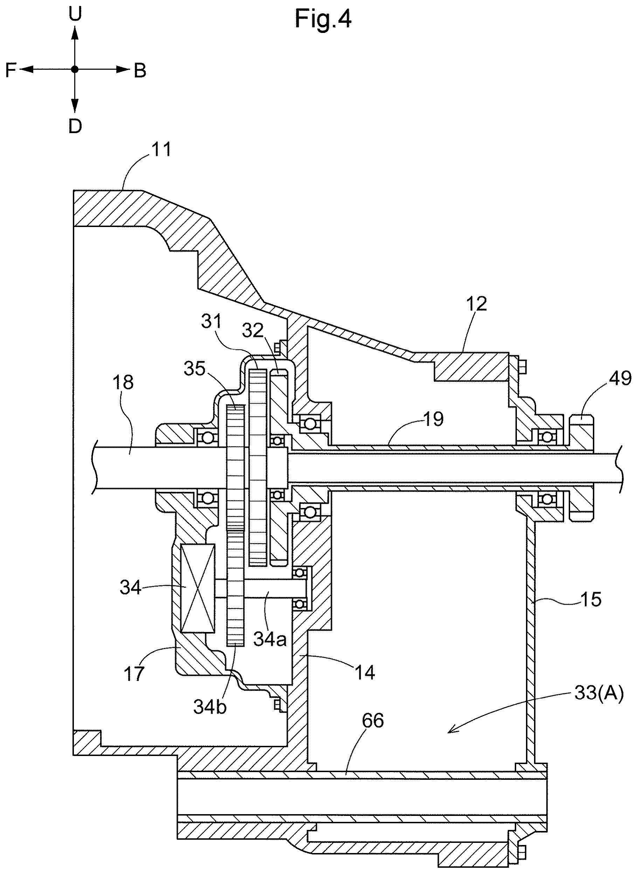

As shown in FIGS. 4 and 7, a reservoir 33 is formed by forming a lower portion of the inside of the motor case 12 into a recessed shape in front view (rear view), and the reservoir 33 stores a comparatively low viscosity lubricating oil A (corresponds to coolant).

As shown in FIGS. 2 and 4, an oil pump 34 (corresponds to pump) is provided in a lower front portion of the inside of the gear case 17 in such a manner as to be located downward of the transmission shafts 18 and 19, and the oil pump 34 is supported by the wall 14 of the motor case 12 via the gear case 17. Inside the gear case 17, the oil pump 34 has a transmission shaft 34a provided parallel to the front-rear direction, and coupled to the transmission shaft 34a of the oil pump 34 is a transmission gear 34b (corresponds to pump gear mechanism).

The oil pump 34 is provided at a lower position than the shaft 21a of the first motor generator 21 and the shaft 22a of the second motor generator 22. The oil pump 34 is provided between the shaft 21a of the first motor generator 21 and the shaft 22a of the second motor generator 22 in plan view.

Inside the gear case 17, the transmission shaft 18 has a transmission gear 35 (corresponds to pump gear mechanism) coupled to a portion thereof on the front side of the transmission gear 31, and the transmission gear 35 engages the transmission gear 34b of the oil pump 34. The oil pump 34 is driven by power from the engine 5 being transmitted to the oil pump 34 via the transmission shaft 18 and the transmission gear 35.

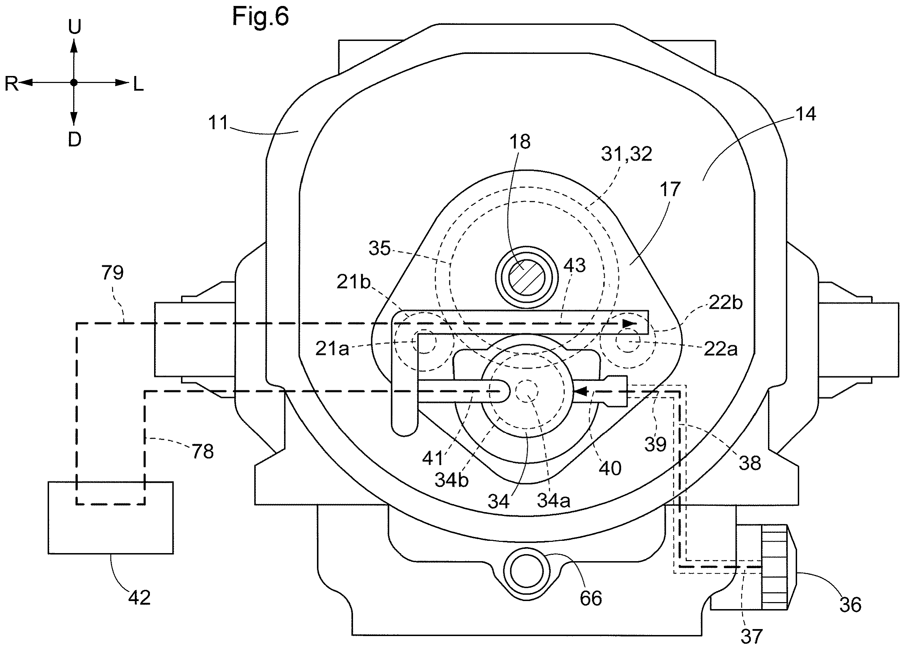

As shown in FIGS. 5, 6, and 7, in a lower left portion of the motor case 12 is provided a filter 36. As shown in FIG. 6, the wall 14 of the motor case 12 has oil channels 37, 38, and 39 formed therein. The oil channel 37 extends from the filter 36 toward a right-left center portion (i.e., center portion in left-right direction) of the motor case 12, the oil channel 38 extends upward from an end portion of the oil channel 37, and the oil channel 39 extends from the upper end portion of the oil channel 38 to the left-right center portion of the motor case 12.

The gear case 17 has oil channels 40, 41, and 43 formed therein, and on the outside of the clutch housing 11 and the motor case 12 is provided an oil cooler 42. The oil channel 40 is connected to the oil channel 39 in the wall 14 of the motor case 12 and is connected to the oil pump 34. The oil channel 41 extends from the oil pump 34, and connected to the oil cooler 42 from the oil channel 41 is an oil channel 78. Connected to the oil channel 43 from the oil cooler 42 is an oil channel 79, and the oil channel 43 extends parallel to the left-right direction.

By driving the oil pump 34, the lubricating oil A in the reservoir 33 is supplied to the oil pump 34 via the oil channels 37, 38, 39, and 40 from the filter 36. The lubricating oil A discharged from the oil pump 34 is supplied to the oil channel 43 via the oil channels 41 and 78, the oil cooler 42, and the oil channel 79.

The lubricating oil A supplied to the oil channel 43 is supplied to the inside of the casing of the first motor generator 21 (corresponds to cooling target), through an oil channel (not shown) formed in the shaft 21a of the first motor generator 21, and is supplied to the inside of the casing of the second motor generator 22 (corresponds to cooling target), via an oil channel (not shown) formed in the shaft 22a of the second motor generator 22.

The supplied lubricating oil A cools the first motor generator 21 and the second motor generator 22, and the lubricating oil A returns to the reservoir 33 from the first motor generator 21 and the second motor generator 22.

The lubricating oil A supplied to the oil channel 43 is supplied to the inside of the gear case 17 through an oil channel (not shown) formed in the transmission shaft 18. The supplied lubricating oil A lubricates and cools the shaft 21a and the transmission gear 21b of the first motor generator 21, the shaft 22a and the transmission gear 22b of the second motor generator 22, the transmission shaft 34a and the transmission gear 34b of the oil pump 34, the transmission gears 31, 32, 35, and the like, and the lubricating oil A returns to the reservoir 33 from the gear case 17.

### Correspondence with Claims relating to Oil Pump

According to the above configuration, the work vehicle further includes a pump (oil pump 34) that supplies coolant (lubricating oil A) to a cooling target (first motor generator 21 and second motor generator 22).

Further included is a pump gear mechanism (transmission gears 34b, 35) that transmits power from the engine transmission shaft (transmission shaft 18) to the pump (oil pump 34). The pump gear mechanism (transmission gears 34b, 35) is attached to the engine transmission shaft (transmission shaft 18) at a portion thereof adjacent to the generator gear mechanism (transmission gears 21b, 31) on the opposite side to the motor gear mechanism (transmission gears 22b, 32).

The pump (oil pump 34) is disposed downward of the engine transmission shaft (transmission shaft 18) and the motor transmission shaft (transmission shaft 19).

The pump (oil pump 34) is disposed at a lower position than the shaft 21a of the generator (first motor generator 21) and the shaft 22a of the motor (second motor generator 22).

The generator gear mechanism (transmission gears 21b, 31), the motor gear mechanism (transmission gears 22b, 32), and the pump gear mechanism (transmission gears 34b, 35) are disposed forward of the generator (first motor generator 21) and the motor (second motor generator 22).

The transmission (first planetary device 23 and second planetary device 24) are disposed rearward of the generator (first motor generator 21) and the motor (second motor generator 22).

### Configuration relating to Reservoir

As shown in FIG. 7, in the reservoir 33 formed in a lower portion of the inside of the motor case 12, the left-right center portion of the reservoir 33 is located in the left-right center portion of the motor case 12. Spanning from a right end 33a to a left end 33b of the reservoir 33 is an interval W1, and spanning from the right end 21c of the first motor generator 21 to the left end 22c of the second motor generator 22 is an interval W2, with the interval W1 being smaller than the interval W2.

The right end 33a of the reservoir 33 is thereby closer to the center of the motor case 12 in the left-right direction than is the right end 21c of the first motor generator 21. Also, the left end 33b of the reservoir 33 is closer to the center of the motor case 12 in the left-right direction than is the left end 22c of the second motor generator 22.

Between the first relay terminal 75 and the right end 33a of the reservoir 33 is an area B1 that extends laterally outward and diagonally upward from the right end 33a of the reservoir 33 as viewed in the front-rear direction (rear view). Between the second relay terminal 76 and the left end 33b of the reservoir 33 is an area B2 that extends laterally outward and diagonally upward from the left end 33b of the reservoir 33 as viewed in the front-rear direction (rear view).

### Configuration relating to Front Wheel Output Shaft

As shown in FIGS. 2, 4, 6, and 7, coupled on the inside of the motor case 12 to span from the wall 14 to the wall 15 of the motor case 12 is a cylindrical partition 66. The partition 66 passes through a lower portion of the left-right center portion of the reservoir 33 (below the transmission shafts 18, 19), and between the partition 66 and the bottom of the motor case 12 (bottom of the reservoir 33) is a gap.

The partition 66 is submerged in the lubricating oil A of the reservoir 33 and is located below a liquid level A1 of the lubricating oil A. The lubricating oil A in the right area and the lubricating oil A in the left area of the reservoir 33 can flow back and forth between the two areas, through the area above the partition 66 and the area below the partition 66 (gap between partition 66 and bottom of motor case 12 (bottom of reservoir 33)).

The area inside the partition 66 is partitioned from the inside of the motor case 12. The front wheel output shaft 64 from the front wheel gearbox 30 protrudes forward from the motor case 12, through the area inside the partition 66, and the transmission shaft 65 is connected to the front end of the front wheel output shaft 64 (see FIG. 2).

Lubricating oil is also stored in the transmission case 13. The first planetary device 23, the second planetary device 24, the first clutch 25, the second clutch 26, the forward/reverse switching device 27, the auxiliary gearbox 28, the rear wheel differential 29, the front wheel gearbox 30, the PTO clutch 46, and the PTO gearbox 47 are lubricated by the lubricating oil of the transmission case 13.

As aforementioned, a comparatively low viscosity lubricating oil A is stored in the reservoir 33 in the motor case 12, and different lubricating oils are used for the lubricating oil A of the motor case 12 and the lubricating oil of the transmission case 13.

As shown in FIGS. 2 and 4, the wall 15 of the motor case 12 partitions the inside of the motor case 12 from the inside of the transmission case 13, and the area inside the partition 66 is partitioned from the inside of the motor case 12. This configuration ensures that the lubricating oil A of the reservoir 33 (motor case 12) does not mix with the lubricating oil of the transmission case 13.

### Configuration relating to Preventing Dispersion of Lubricating Oil from Reservoir onto Power Wires

As shown in FIG. 7, the motor case 12 is integrally provided with right and left protrusions 74 that protrude toward the left-right center portion of the reservoir 33, on an upper end portion of the right end 33a and an upper end portion of the left end 33b of the reservoir 33 on the inner surface of the outer periphery of the motor case 12.

In this case, the amount of lubricating oil A stored in the reservoir 33 is set such that the liquid level A1 of the lubricating oil A stored in the reservoir 33 is lower than the protrusions 74. Instead of the protrusions 74 integrally provided on the inner surface of the outer periphery of the motor case 12, protrusions 74 that are separate from the motor case 12 may be attached to the inner surface of the outer periphery of the motor case 12.

On the outer periphery of the first motor generator 21 are formed a plurality of attachment portions 21d and 21e. The attachment portions 21d and 21e are formed to protrude outward of the first motor generator 21 from the outer periphery of the first motor generator 21 in the radial direction of the shaft 21a of the first motor generator 21, and to extend along the shaft 21a of the first motor generator 21.

On the outer periphery of the second motor generator 22 are formed a plurality of attachment portions 22d and 22e. The attachment portions 22d and 22e are formed to protrude outward of the second motor generator 22 from the outer periphery of the second motor generator 22 in the radial direction of the shaft 22a of the second motor generator 22, and to extend along the shaft 22a of the second motor generator 22.

The inner surface of the wall 14 of the motor case 12 has bosses (not shown) formed thereon, and the first motor generator 21 is coupled to the wall 14 of the motor case 12, as a result of the attachment portions 21d and 21e of the first motor generator 21 being coupled by bolting to the bosses of the motor case 12. Also, the second motor generator 22 is coupled to the wall 14 of the motor case 12, as a result of the attachment portions 22d and 22e of the second motor generator 22 being coupled by bolting to the bosses of the motor case 12.

The attachment portion 21d, which is one of the attachment portions 21d and 21e of the first motor generator 21, is located upward of the right protrusion 74 and enters the area B1 between the first relay terminal 75 and the right end 33a of the reservoir 33 from above, as viewed in the front-rear direction.

The attachment portion 22d, which is one of the attachment portions 22d and 22e of the second motor generator 22, is located upward of the left protrusion 74 and enters the area B2 between the second relay terminal 76 and the left end 33b of the reservoir 33 from above, as viewed in the front-rear direction.

In the case where the lubricating oil A disperses toward the power wires 70 from the reservoir 33, adhesion of the lubricating oil A to the power wires 70 can be prevented, by the lubricating oil A coming in contact with lower portions of the first and second motor generators 21 and 22, the right and left protrusions 74, the attachment portions 21d and 22d of the first and second motor generators 21 and 22, and the like.

The lubricating oil A from the oil pump 34 is supplied to the inside of the casing of the first motor generator 21 and the inside of the casing of the second motor generator 22, and thus the lubricating oil A from the oil pump 34 does not adhere to the power wires 70 when supplied to the first motor generator 21 and the second motor generator 22.

### First Alternative Embodiment of Invention

The first motor generator 21 may be provided on the left side of the transmission shafts 18 and 19, and the second motor generator 22 may be provided on the right side of the transmission shafts 18 and 19.

Also, the first motor generator 21 and the second motor generator 22 may be disposed such that the shaft 21a of the first motor generator 21 and the shaft 22a of the second motor generator 22 are located at the same height as the transmission shafts 18 and 19.

### Second Alternative Embodiment of Invention

The first motor generator 21 and the second motor generator 22 may be provided such that the shaft 21a of the first motor generator 21 is oriented in the left-right direction, and the shaft 22a of the second motor generator 22 is oriented in the left-right direction.

### Third Alternative Embodiment of Invention

In FIGS. 2 and 3, the gear ratio of the transmission gear 21b of the first motor generator 21 and the transmission gear 31 and the gear ratio of the transmission gear 22b of the second motor generator 22 and the transmission gear 32 may be set to the same gear ratio, such that the reduction in speed from the transmission gear 22b of the second motor generator 22 to the transmission gear 32 is the same as the reduction in speed from the transmission gear 21b of the first motor generator 21 to the transmission gear 31.

### Fourth Alternative Embodiment of Invention

In FIGS. 2 and 3, the gear ratio of the transmission gear 21b of the first motor generator 21 and the transmission gear 31 and the gear ratio of the transmission gear 22b of the second motor generator 22 and the transmission gear 32 may be set, such that the reduction in speed from the transmission gear 22b of the second motor generator 22 to the transmission gear 32 is greater than the reduction in speed from the transmission gear 21b of the first motor generator 21 to the transmission gear 31.

### Fifth Alternative Embodiment of Invention

The oil pump 34 may be disposed upward of the transmission shafts 18 and 19.

### Sixth Alternative Embodiment of Invention

The oil pump 34 may be disposed at the same height as the transmission shafts 18 and 19.

In this case, part of the oil pump 34 may be disposed at approximately the same height as part of the transmission shafts 18 and 19. The oil pump 34 may be disposed such that part of the oil pump 34 overlaps part of the transmission shafts 18 and 19 as viewed in the longitudinal direction of the transmission shafts 18 and 19.

### Seventh Alternative Embodiment of Invention

The oil pump 34 may be disposed on the same axis as the transmission shafts 18 and 19.

In this configuration, the oil pump 34 may be directly attached to the transmission shaft 18 or the transmission shaft 19 and be driven by the transmission shafts 18 and 19.

### Eighth Alternative Embodiment of Invention

In FIGS. 2, 3, and 4, the generator gear mechanism (transmission gears 21b, 31), the pump gear mechanism (transmission gears 34b, 35), and the motor gear mechanism (transmission gears 22b, 32) may be disposed in the stated order from the front side.

According to this configuration, the pump gear mechanism (transmission gears 34b, 35) is disposed between the generator gear mechanism (transmission gears 21b, 31) and the motor gear mechanism (transmission gears 22b, 32).

### Ninth Alternative Embodiment of Invention

In FIGS. 2, 3, and 4, the motor gear mechanism (transmission gears 22b, 32) may be disposed on the rear side of the first motor generator 21 and the second motor generator 22, that is, on the same side as the transmission (first planetary device 23 and second planetary device 24).

In this configuration, the generator gear mechanism (transmission gears 21b, 31) may be disposed on the front side of the pump gear mechanism (transmission gears 34b, 35).

### Tenth Alternative Embodiment of Invention

Instead of the transmission gear 21b being directly coupled to the shaft 21a of the first motor generator 21, another transmission shaft (not shown) may be coaxially coupled to the shaft 21a of the first motor generator 21, and the transmission gear 21b may be coupled to this other transmission shaft.

The transmission gear 21b is not limited to being attached to the shaft 21a of the first motor generator 21, and need only be provided coaxially with the shaft 21a of the first motor generator 21 and rotate in tandem with the shaft 21a of the first motor generator 21.

### Eleventh Alternative Embodiment of Invention

Instead of the transmission gear 22b being directly coupled to the shaft 22a of the second motor generator 22, another transmission shaft (not shown) may be coaxially coupled to the shaft 22a of the second motor generator 22, and the transmission gear 22b may be coupled to this other transmission shaft.

The transmission gear 22b is not limited to being attached to the shaft 22a of the second motor generator 22, and need only be provided coaxially with the shaft 22a of the second motor generator 22 and rotate in tandem with the shaft 22a of the second motor generator 22.

### Industrial Applicability

The present invention can be applied not only to tractors but also to work vehicles that load and transport loads, work vehicles that tow trolleys and the like, and work vehicles for use in construction such as foil loaders, and to work vehicles equipped with crawler-type travel devices instead of front and rear wheels.

### Description of Reference Signs

- 1: Front wheel (travel device)
- 2: Rear wheel (travel device)
- 5: Engine
- 18: Transmission shaft (engine transmission shaft)
- 19: Transmission shaft (motor transmission shaft)
- 21: First motor generator (generator) (motor generator) (cooling target)
- 21a: Shaft
- 21b: Transmission gear (generator gear mechanism) (first transmission gear)
- 22: Second motor generator (motor) (motor generator) (cooling target)
- 22a: Shaft
- 22b: Transmission gear (motor gear mechanism) (third transmission gear)
- 23: First planetary device (transmission)
- 24: Second planetary device (transmission)
- 31: Transmission gear (generator gear mechanism) (second transmission gear)
- 32: Transmission gear (motor gear mechanism) (fourth transmission gear)
- 34: Oil pump (pump)
- 34b: Transmission gear (pump gear mechanism)
- 35: Transmission gear (pump gear mechanism)
- 73: Battery
- A: Lubricating oil (coolant)

## Claims

1. A work vehicle comprising:
a travel device;
an engine;
a generator;
a motor;
a battery;
a generator gear mechanism configured to adjust power from the engine to increase speed and transmit the adjusted power to the generator;
a motor gear mechanism configured to adjust power from the motor to reduce speed and transmit the adjusted power; and
a transmission configured to combine the power from the engine with the power from the motor adjusted to reduce speed by the motor gear mechanism and transmit the combined power to the travel device.

2. The work vehicle according to claim 1,
wherein the generator and the motor are each a motor generator.

3. The work vehicle according to claim 1 or 2, further comprising:
an engine transmission shaft configured to transmit the power from the engine; and
a cylindrical motor transmission shaft attached to an outer periphery of the engine transmission shaft in such a manner as to be rotatable relative to the engine transmission shaft,
wherein the motor gear mechanism is attached to an end portion of the motor transmission shaft,
the generator gear mechanism is attached to the engine transmission shaft at a portion thereof adjacent to the end portion of the motor transmission shaft,
the power from the engine is transmitted to the generator via the generator gear mechanism, and to the transmission via the engine transmission shaft, and
the power from the motor is transmitted to the transmission via the motor gear mechanism and the motor transmission shaft.

4. The work vehicle according to claim 3,
wherein the generator gear mechanism includes:
a first transmission gear provided coaxially with a shaft of the generator and configured to operate in tandem with the shaft of the generator; and
a second transmission gear attached to the engine transmission shaft, engaging the first transmission gear, and having a larger diameter than the first transmission gear,
the motor gear mechanism includes:
a third transmission gear provided coaxially with a shaft of the motor and configured to operate in tandem with the shaft of the motor; and
a fourth transmission gear attached to the motor transmission shaft, engaging the third transmission gear, and having a larger diameter than the third transmission gear.

5. The work vehicle according to claim 4,
wherein a gear ratio of the third transmission gear and the fourth transmission gear and a gear ratio of the first transmission gear and the second transmission gear are set in such a manner that reduction in speed from the third transmission gear to the fourth transmission gear is less than reduction in speed from the first transmission gear to the second transmission gear.

6. The work vehicle according to any one of claims 3 to 5,
wherein the engine and motor transmission shafts are disposed parallel to a front-rear direction,
the generator is disposed on one of a left and right of the engine and motor transmission shafts, and
the motor is disposed on the other of the left and right of the engine and motor transmission shafts.

7. The work vehicle according to any one of claims 3 to 6,
wherein the shaft of the generator and the shaft of the motor are disposed at a lower position than the engine and motor transmission shafts.

8. The work vehicle according to any one of claims 3 to 7, further comprising:
a pump configured to supply coolant to a cooling target; and
a pump gear mechanism configured to transmit power from the engine transmission shaft to the pump,
wherein the pump gear mechanism is attached to the engine transmission shaft at a portion thereof adjacent to the generator gear mechanism on an opposite side to the motor gear mechanism.

9. The work vehicle according to claim 8,
wherein the pump is disposed downward of the engine and motor transmission shafts.

10. The work vehicle according to claim 8 or 9,
wherein the engine and motor transmission shafts are disposed parallel to a front-rear direction,
the generator is disposed on one of a left and right of the engine and motor transmission shafts,
the motor is disposed on the other of the left and right of the engine and motor transmission shafts,
the shaft of the generator and the shaft of the motor are disposed at a lower position than the engine and motor transmission shafts, and
the pump is disposed at a lower position than the shaft of the generator and the shaft of the motor.

11. The work vehicle according to any one of claims 8 to 10,
wherein the generator gear mechanism, the motor gear mechanism, and the pump gear mechanism are disposed on a front side of the generator and the motor, and
the transmission is disposed on a rear side of the generator and the motor.
